# EUROPÄISCHE PATENTANMELDUNG

(11) **EP 1 382 651 A1**
(43) Veröffentlichungstag der Anmeldung: **21.01.2004**
(21) Anmeldenummer: 03015242.5
(22) Anmeldetag: 05.07.2003
(51) Int. Cl.: C09D 183/06, C08K 5/49, C08K 5/36, C09J 7/02

(54) **Verwendung von Antioxidantien in strahlenhärtbaren Beschichtungsmassen für die Herstellung von abhäsiven Beschichtungen**

(30) Priorität: 19.07.2002 DE 10232828
(71) Anmelder: Goldschmidt AG, 45127 Essen (DE)
(72) Erfinder: Brand, Mike, 45356 Essen (DE); Döhler, Hardi, 45525 Hattingen (DE); Hamann, Winfried, Dr., 45356 Essen (DE); Pomorin, Jürgen, 45309 Essen (DE)

(57) **Zusammenfassung**

Gegenstand der vorliegenden Erfindung sind strahlenhärtbare Beschichtungsmassen für die Herstellung von abhäsiven Beschichtungen, welche mindestens ein strahlungshärtendes Organopolysiloxan mit (Meth)acrylsäureestergruppen, ein Zusatzmittel zur Kompensation der durch Sauerstoff verursachten Inhibierung bei der Härtung und gegebenenfalls Photoinitiatoren, übliche Hilfsund Zusatzstoffe enthalten, welche dadurch gekennzeichnet sind, dass als Zusatzmittel mindestens ein Antioxidans aus der Gruppe der Phosphor-(III)-verbindungen und/ oder der schwefelhaltigen Verbindungen mitverwendet werden.

## Beschreibung

Gegenstand der Erfindung sind strahlenhärtbare Beschichtungsmassen, welche mindestens ein strahlungshärtendes Organopolysiloxan mit (Meth)acrylsäureestergruppen enthalten, worin zur Kompensation der durch Sauerstoff verursachten Inhibierung bei der Härtung Antioxidantien mitverwendet werden und deren Verwendung zur Herstellung abhäsiver Beschichtungen.

Abhäsive Beschichtungsmassen werden in grösserem Umfang zur Beschichtung insbesondere von flächigen Materialien verwendet, um die Adhäsionsneigung von adhärierenden Produkten gegenüber diesen Oberflächen zu verringern.

Abhäsive Beschichtungsmassen werden beispielsweise zur Beschichtung von Papieren oder Folien verwendet, welche als Träger für selbstklebende Etiketten dienen sollen. Die mit einem Haftkleber versehenen Etiketten haften auf der beschichteten Oberfläche noch in genügendem Maße, um die Handhabung der die Klebeetiketten aufweisenden Trägerfolien zu ermöglichen. Die Haftung der Klebeetiketten auf den Trägerfolien muss so hoch sein, dass bei der maschinellen Applikation von Etiketten, z.B. auf Gebinde, beim Lauf der mit den Etiketten versehenen Trägerfolien über Umlenkwalzen kein vorzeitiges Ablösen erfolgt. Andererseits müssen jedoch die Etiketten von der beschichteten Trägerfolie abziehbar sein, ohne dass ihre Klebkraft für die spätere Verwendung wesentlich beeinträchtigt wird. Weitere Anwendungsmöglichkeiten für abhäsive Beschichtungsmassen sind Verpackungspapiere, die insbesondere zur Verpackung von klebrigen Gütern dienen. Derartige abhäsive Papiere oder Folien werden beispielsweise zum Verpacken von Lebensmitteln oder zum Verpacken technischer Produkte, wie z.B. Bitumen, verwendet.

Eine weitere Anwendung von abhäsiven Beschichtungsmassen besteht in der Herstellung von Haftverschlüssen, wie z.B. bei sogenannten Höschenwindeln. Ist die Abhäsivität zu hoch, d.h. der Trennwert zu niedrig, bleibt die Windel nicht zuverlässig geschlossen. Ist die Abhäsivität zu niedrig und damit der Trennwert zu hoch, lässt sich der Verschluss nicht mehr ohne Zerreissen der Windel öffnen.

Die Darstellung von Organosiloxanen mit (meth)acrylatmodifizierten organischen Gruppen, die über Si-O- und/oder über SiC-Bindungen an die Siloxaneinheit gebunden sind, ist in zahlreichen Patentschriften beschrieben. Stellvertretend werden zum Stand der Technik die folgenden Patent- und Offenlegungsschriften genannt.

Organopolysiloxane, bei denen die (meth)acrylathaltigen organischen Gruppen über eine Si-O-C-Bindung mit dem Polysiloxangerüst verbunden sind, sind in der DE-C-27 47 233 und der DE-C-29 48 708 beschrieben.

Organopolysiloxane, bei denen die acrylesterhaltigen organischen Gruppen über Si-C-Bindungen mit dem Polysiloxangerüst verbunden sind, können z.B. dadurch hergestellt werden, dass man an ein Wasserstoffsiloxan Allylglycidether oder ein anderes geeignetes Epoxid mit einer olefinischen Doppelbindung addiert und nach der Anlagerung das Epoxid mit Acrylsäure unter Öffnung des Epoxidringes verestert. Diese Verfahrensweise ist in der DE-C-38 20 294 beschrieben.

Eine weitere Möglichkeit der Herstellung (meth)acrylatmodifizierter Polysiloxane mit Si-C-Verknüpfung der modifizierenden Gruppe(n) besteht darin, dass man an ein Wasserstoffsiloxan einen Alkohol mit einer olefinischen Doppelbindung, z. B. Allylalkohol, in Gegenwart eines Platinkatalysators, addiert und dann die OH-Gruppe dieses Alkohols mit Acrylsäure oder einem Gemisch von Acrylsäure und anderen gegebenenfalls gesättigten Säuren umsetzt. Diese Verfahrensweise ist z. B. in der DE-C-38 10 140 beschrieben.

Des Weiteren ist es möglich, jeweils mehrere (Meth)acrylatgruppen pro Verbindungsglied an das Siloxangerüst zu binden. Um eine möglichst gute Vernetzung, das heißt, eine möglichst hohe Anzahl an reaktiven Gruppen, bei gleichzeitig so geringer Modifizierungsdichte am Siloxangerüst wie möglich zu erzielen, ist es wünschenswert, mehr als eine (Meth)acrylatgruppe je Verbrückungsglied anzubinden. Solche Verfahren sind z.B. in der US-A-6 211 322 beschrieben.

Beispiele der genannten Organosiliciumverbindungen sind z.B. von der Firma Goldschmidt/Deutschland unter der Produktbezeichnung TEGO® RC, von Shin Etsu/Japan unter der Bezeichnung X-8010 und von Rhodia/Frankreich unter der Bezeichnung UV Poly 100 und RCA 110 verfügbar.

Allen genannten Organosiliciumverbindungen ist gemeinsam, dass sie durch UV-Strahlung (nach Zusatz bekannter Photoinitiatoren) oder durch Elektronenstrahlung (EB) in einer radikalischen Polymerisation in kürzester Zeit aushärten. Eine Übersicht über geeignete Photoinitiatoren, jedoch keine Einschränkung, ist in "J.P. Fouassier, Polymerization Photoinitiators: Exited State Process and Kinetic Aspects, Progress in Organic Coating, 18 (1990) 229-252 und in der EP-A-1 072 326 gegeben.

Zur Herstellung der genannten Beschichtungsmittel werden üblicherweise die härtbaren Mischungen auf flächige Träger aus Kunststoff, Metallen oder Papier aufgebracht und bahnförmig von Rolle zu Rolle bei hohen Anlagengeschwindigkeiten von mehreren hundert Metern pro Minute durch eine UV- oder EB-Anlage geführt und gehärtet.

Die radikalische Polymerisation unterliegt einer einschränkenden Sauerstoffinhibierung. Diese Einschränkung ist um so gravierender, je geringer der Gehalt an zur Polymerisation befähigten Doppelbindungen ist. Der Modifizierungsgrad kann nicht beliebig gewählt werden, da eine hohe Konzentration an zur Polymerisation befähigten Doppelbindungen die Trenneigenschaften beeinflusst. Die beschriebenen Organosiliziumverbindungen, die eine besonders gute abhäsive Eigenschaft aufweisen, enthalten üblicherweise einen sehr geringen Anteil an zur Polymerisation befähigten Doppelbindungen.

In "U. Müller, New Insights in the Influence of Oxygen on the Photocrosslinking of Silicone Acrylates, Organosilicon Chem. IV, 4th (2000), Meeting Date 1998, 663-666. Wiley-VCH Verlag GmbH, Weinheim, Germany", wird gezeigt, dass bei der UV-Härtung von TEGO® RC Siliconen der Firma Goldschmidt in dünnen Schichten unter 100 µm an Luft keine Acrylatdoppelbindungen verbraucht werden, also keine Härtung einsetzt, da alle Initiatorradikale durch Sauerstoff abgefangen werden.

Im Gegensatz zu den genannten Organosiliziumverbindungen ist eine Vielzahl von rein organischen Verbindungen bekannt, die zur radikalischen Polymerisation befähigte Doppelbindungen enthalten und durch UV-Strahlung (nach Zusatz bekannter Photoinitiatoren, wie z.B. Benzophenon und seiner Derivate) oder durch Elektronenstrahlung aushärten. Diesen organischen UV-härtenden Beschichtungsmassen ist üblicherweise gemeinsam, dass sie im Vergleich zu den genannten Organosiliziumverbindungen einen höheren Anteil an zur Polymerisation befähigten Doppelbindungen enthalten. Diese Beschichtungsmassen werden z.B. für Druckfarben und zur Herstellung von Lackbindemitteln oder für die Beschichtung von Papier, Kunststoff-, Holz- und Metalloberflächen eingesetzt, jedoch ohne eine qualitativ hochwertige abhäsive Eigenschaft. Die Beschichtung erfüllt ihren Einsatzzweck, wenn sie z.B. schmierfrei mit ausreichender Oberflächenhärte und Glanz aushärtet. Daher ist der Gehalt an zur Polymerisation befähigten Doppelbindungen variabler wählbar und in den meisten Fällen deutlich höher.

Im Gegensatz zu den genannten Organosiliziumverbindungen sind die genannten organischen Verbindungen wegen des höheren Anteils an zur Polymerisation befähigten Doppelbindungen deutlich weniger empfindlich gegen Sauerstoffinhibierung. Durch die Erhöhung der UV-Bestrahlungsintensität oder die Erhöhung der Photoinitiatorkonzentration kann die Sauerstoffempfindlichkeit weiter reduziert werden. Die Beschichtungsmasse ist daher häufig in normaler Luft aushärtbar.

Die Erhöhung der UV-Bestrahlungsintensität oder die Erhöhung der Photoinitiatorkonzentration führt bei der Aushärtung der beschriebenen Organosiliciumverbindungen an Luft oder bei hohen Restsauerstoffkonzentrationen nicht zu qualitativ hochwertigen Trennbeschichtungen. Durch eine zu hohe Restsauerstoffkonzentration werden die Trenneigenschaften der gehärteten Beschichtung negativ beeinflusst. Der Grad der Durchhärtung der Beschichtungsmasse geht mit zunehmendem Restauerstoffgehalt zurück. Es bleiben nicht vernetzte Organosiliciumverbindungen in der Beschichtung zurück. Die Trennbeschichtung zeigt gegen klebende Substanzen eine Reaktion mit Bestandteilen der klebenden Substanz, die zu einer Veränderung der Trennwirkung gegen die klebende Substanz führt. Insbesondere kann die Trennwertstabilität über längere Zeiträume negativ beeinflusst werden.

Daher hat sich die Abdeckung der Beschichtung im Moment der Aushärtung mit reinem Stickstoff als notwendig erwiesen. Hierbei wird der Reaktionsraum der UV- oder EB-Anlage mit Stickstoff hoher Reinheit gespült und Luftsauerstoff auf eine Restsauerstoffkonzentration von vorzugsweise < 50 ppm verdrängt. Die Verwendung von Stickstoff verursacht jedoch einen zusätzlichen Kostenaufwand.

In der Literatur sind verschiedene Möglichkeiten zur chemischen Kompensation der Sauerstoffinhibierung aufgezeigt:
1. In "K. K. Dietliker, Chemistry & Technology of UV & EB Formulation for Coatings, Inks & Paints, Volume 3, Sita Technology Ltd, UK, pp 83" wird die Zugabe von Aminen, insbesondere tert. Aminen beschrieben.
2. In "C. Decker, A Novel Method for Consuming Oxygen Instantaneously in Photopolymerizable Films, Macromol. Chem. 180, 2027-2030 (1979)" wird die infrarotinduzierte Anregung von Sauerstoff in den Singuletzustand durch z.B. Methylenblau und nachfolgende Oxydation von 1,3 Diphenylisobenzofuran als Abfangreaktion von freiem Sauerstoff beschrieben.
3. In "C.W. Miller et al, Analysis of the reduction of oxygen inhibition by N-Vinylimides in free radical photocuring of acrylic formulations, RadTech 2000, Technical proceedings" wird der positive Effekt von N-Vinylimiden auf die UV-Härtung von organischen Beschichtungsmassen unter Luft beschrieben.
4. In "B. Xiao et al, Studies on curing effects of phosphite monomer by EB radiation in the air, Radiation Physics and Chemistry 57 (2000) 421-424" wird die Synthese eines acrylatfunktionellen Phosphites und sein Einsatz in organischen Acrylatbeschichtungsmassen bei der EB-Härtung in Luft beschrieben.
5. In "C.R. Mogan et al, UV generated oxygen scavengers and their effectiveness in photopolymerizable systems, Journal of Radiation Curing, October 1983" wird der Effekt von Aminen, Thiolen und Phosphorverbindungen auf die Abnahme des in organischen UV-härtenden Beschichtungsmassen gelösten Sauerstoffs untersucht.
6. In "E. Zadok, Optimisation of the photocuring of a ternary mixture of methacrylic monomers using DSC, Thermal analysis highlights, 9^{th} ICTA, Jerusalem, Israel, 21-25 August 1988" wird die Verwendung der Differntial Scanning Calorimertie zur Untersuchung der UV-Härtung von organischen Beschichtungsmassen und Phosphiten beschrieben.
7. In US-A-3 699 022 wird die Verwendung von organischen UV-härtenden Beschichtungsmassen auf Basis ungesättigter Polyester mit einer Mischung aus Benzoinether Photoinitiatoren Phosphinen und Phosphiten beschrieben.

Die Wirksamkeit der Reaktionsprinzipien wird in (2, 5, 6) für Laborsysteme beschrieben. Es werden keine Voraussagen für die Eignung in schnell laufenden Produktionsanlagen in der Anwendung in dünner Schicht auf flächigen Trägern gemacht. Alle genannten Methoden mit Ausnahme der Verwendung von insbesondere tert. Aminen (1) haben sich in der Praxis nicht bewährt und finden keine Entsprechung in üblichen Formulierungen und Anwendungen von UV- oder EB-härtenden Beschichtungsmassen oder Trennbeschichtungen. Die Wirksamkeit von tert. Aminen reicht bei der Aushärtung der beschriebenen Organosiliciumverbindungen allerdings nicht aus, den zulässigen Gehalt an Restsauerstoff signifikant zu erhöhen, ohne zunehmend zu qualitativ minderwertigen Trennbeschichtungen zu führen.

Die Thiole und Phosphorverbindungen aus den Literaturstellen (4-7) werden üblicherweise als Antioxidationsmitteln in Kunststoffen und Beschichtungen zur Verbesserung der Haltbarkeit und Bewitterungs- und UV-Stabilität eingesetzt. Sie haben keine technische Relevanz zur Verbesserung der Sauerstoffinhibierung bei organischen UV- oder EB-härtenden Beschichtungsmassen erhalten.

Überraschenderweise wurde gefunden, dass durch den Einsatz von solchen Antioxidationsmitteln der negative Einfluss des Luftsauerstoffs bei der Aushärtung der genannten unter UV-Licht oder mittels Elektronenstrahlen härtbaren Organosiloxanyl-(meth)acrylate effektiv unterdrückt wird. Die Toleranz gegenüber dem Restsauerstoffgehalt im Reaktionsraum wird signifikant erhöht und die Eigenschaft der daraus hergestellten Trennbeschichtung gegen klebende Substanzen wird verbessert.

Ein Gegenstand der vorliegenden Erfindung ist deshalb eine strahlenhärtbare Beschichtungsmasse, welche mindestens ein strahlungshärtendes Organopolysiloxan mit (Meth)acrylsäureestergruppen, ein Zusatzmittel zur Kompensation der durch Sauerstoff verursachten Inhibierung bei der Härtung und gegebenenfalls Photoinitiatoren, übliche Hilfs- und Zusatzstoffe enthält, welche dadurch gekennzeichnet sind, dass als Zusatzmittel mindestens ein Antioxidans aus der Gruppe der Phosphor-(III)-verbindungen und/oder der schwefelhaltigen Verbindungen mitverwendet wird.

Weitere Gegenstände der Erfindung sind durch die Ansprüche gekennzeichnet.

Die erfindungsgemäss mitverwendbaren Antioxidantien sind solche, welche üblicherweise zur Stabilisierung von Eigenschaften wie der Lagerfähigkeit, Hitzebeständigkeit, Bewitterungsbeständigkeit und UV-Beständigkeit in Kunststoffbeschichtungen und Kunststoffformkörpern eingesetzt werden. Die hier teilweise auch als Stabilisatoren bezeichneten Verbindungen fallen mit unter die erfindungsgemäße Definition der Antioxidantien. Erfindungsgemässe Antioxidantien sind solche aus der Gruppe der peroxidzersetztenden Antioxidantien, insbesondere solche mit Phosphor- (111)-Verbindungen und schwefelhaltige Antioxidantien: Phosphor-(III)-Verbindungen sind Antioxidantien der allgemeinen Formel

(R)_{b}-P-(OR)ₐ

worin die Reste
- R: gleich oder verschieden aliphatische, cycloaliphatische, aromatische, araliphatische oder heterocyclische Radikale sind und
- a und b: Werte von 0 bis 3 sein können und worin a + b 3 sein muß,
vorzugsweise ist mindestens einer der Reste -OR, wie beispielsweise
Triphenylphosphit, Diphenylisodecylphosphit, Diphenylisooctylphosphit,Phenyldiisodecylphosphit, Triisodecylphosphit, Triisobutylphosphit, Tris(2-ethylhexyl)phosphit, Tris-(Tridecyl)phosphit, Trilaurylphosphit, 4,4'-Butyliden-bis-(3-methyl-6-t-butylphenylditridecyl)phosphit, Neopentantetraylbis(octadecyl)phosphit, Tris(nonylphenyl)phosphit, Tris(mono- und/oder dinonylphenyl)phosphit, Diisodecylpentaerythritoldiphosphit, Tetraphenyldipropylenglycoldiphosphit, Poly(dipropylenglycol)phenylphosphit, Alkyl (C₁₀ bis C₁₅) bisphenol A phosphit, Tris(dipropylenglycol)phosphit, Dioleylhydrogenphosphit, 9,10-Dihydro-9-oxa-10-phosphaphenantren-10-oxid, 10-(3,5-di-t-butyl)-4-hydroxybenzyl-9, 10-dihydro-9-oxa-10-phosphaphenantren-10-oxid, 10-Decyloxy-9,10-dihydro-9-oxa-10-phosphaphenantren, Tris(2,4-di-t-butylphenyl)phosphit, cyclisches Neopentantetraylbis(2,4-di-t-butylphenyl)phosphit, cyclisches Neopentantetraylbis(2,6-di-t-butyl-4-maethylphenyl)-phosphit; 2,2-Methylenbis-(4,6-di-t-butylphenyl)octylphosphit, Distearylpentaerythritoldiphosphit, Di(2,4-di-t-butylphenyl)phosphit, Tetrakis(2,4-die-t-butylphenyl)-4,4-biphenylendiphosphonit, Bis(2-ethylhexyl)2-ethylhexylphosphonat, Dibutyl-butylphosphonat, Triisooctylphosphin, Triphenylphosphin, Phenyl-diisooctylphosphin.
Schwefelhaltige Antioxidantien, wie Dilauryl-3,3'-thiodipropionat, Dimyristyl-3,3'-thiodipropionat, Distearyl-3,3'thiodipropionat, 2-Mercaptobenzimidazol, n-Dodecylthiol, Tetrakismethylen-3-(laurylthio)propionatmethan, Stearylthiopropylamid, Distearyl-disulfid, 3,3-Thio-di-(propionsäurelaurylester), 3,3-Thio-di(propionsäurestearylester), Di-octadecyl-disulfid, Thiodiethylen bis[3-(3,5-ditert.butyl-4-hyroxyphenyl)propionat], 4,6-Bis(octylthiomethyl)-o-cresol, 4,4'Thiobis(2-t-butyl-5-methylphenol), 4,4'Thiobis(6-t-butyl-5-methylphenol), Metallsalze, z.B. das Zinksalz, der Dialkyldithiocarbaminsäure, Zinkdialkyldithiophosphate wie Zink di(4-methylpentyl)-2-dithiophosphonat.

Diese können allein oder jeweils in Kombination miteinander oder untereinander verwendet werden. Die Antioxidationsmittel werden bezogen auf die genannten organomodifizierten Polysiloxanen in einer Menge von 0,00001 bis 20 Gew.-%, insbesondere 0,005 bis 5 Gew.-% verwendet.

Das Verfahren zur Beimischung der Antioxidationsmittel zu den genannten organomodifizierten Polysiloxanen unterliegt keiner besonderen Beschränkung. Vorzugsweise werden Antioxidationsmittel verwendet, die in schmelzbarer (Fp < ca. 80 °C) oder flüssiger Form vorliegen. Besonders geeignet sind Antioxidationsmittel, die in der Siliconmatrix verträglich und mischbar sind.

Vorteile der UV- oder EB-Vernetzung einer erfindungsgemässen Mischung aus Antioxidantien und/oder Stabilisatoren und den genannten organomodifizierten Polysiloxanen sind:
- Der zulässige Restsauerstoffgehalt bei der UV-induzierten Polymerisation ist signifikant erhöht.
- Die Aushärtung der Produkte auf Trägermaterial ist dadurch mit erhöhter Geschwindigkeit möglich.
- Einsparung von reinem Stickstoff, wie er zur Erreichung von sehr niedrigen Restsauerstoffkonzentrationen im Reaktionsraum benötigt wird, sowie der Möglichkeit der Verwendung von weniger reinem Stickstoff zur Inertisierung.
- Vereinfachung des maschinenbaulichen Aufwandes zur Erreichung der nunmehr erhöhten Restsauerstoffkonzentration sowie eine Erhöhung der Produktionssicherheit.
- Die erhaltenen Trennbeschichtungen besitzen ein verbessertes Eigenschaftsprofil.
- Eine Veränderung der Abhäsivität der ausgehärteten Produkte bei der Lagerung, erkennbar durch den Anstieg der Trennwerte, ist nicht oder nur in geringerem Umfang gegeben.
   Die erfindungsgemässen härtbaren Mischungen aus Antioxidantien und den genannten organomodifizierten Polysiloxanen und Photoinitiatoren können als strahlenhärtende Lacke oder Beschichtungsmassen oder als Additive in solchen Systemen eingesetzt werden.

Sie können in üblicher Weise mit Härtungsinitiatoren, Füllstoffen, Pigmenten, anderen an sich bekannten Acrylatsystemen und weiteren üblichen Zusatzstoffen compoundiert werden. Sie können dreidimensional durch freie Radikale vernetzt werden und härten unter Einfluss energiereicher Strahlung wie UV- oder Elektronenstrahlung, innerhalb kürzester Zeit zu mechanisch und chemisch widerstandsfähigen Schichten aus. Wird als Strahlungsquelle UV-Licht verwendet, erfolgt die Vernetzung vorzugsweise in Anwesenheit von Photoinitiatoren und/oder Photosensibilisatoren wie z.B. Benzophenon und dessen Derivate oder Benzoin und entsprechenden substituierten Benzoinderivaten.

Photoinitiatoren und/oder Photosensibilisatoren werden in den die Organopolysiloxane enthaltenden Zusammensetzungen vorzugsweise in Mengen von 0,01 bis 10 Gew.-%, insbesondere von 0,1 bis 5 Gew.-%, jeweils bezogen auf das Gewicht der acrylatfunktionellen Organopolysiloxane verwendet.

Nachfolgende Beispiele sollen zur Verdeutlichung der Erfindung dienen, sie stellen jedoch keinerlei Einschränkung dar.

### Beispiele:

### Anwendungstechnische Überprüfung:

Zur Überprüfung der anwendungstechnischen Eigenschaften der erfindungsgemäss zu verwendenden Substanzen werden die Produkte der Beispiele sowie die der nicht erfindungsgemässen Vergleichsbeispiele nach Zugabe von 2 % Photoinitiator (Darocur® 1173, Ciba Spezialitäten Chemie) auf flächige Träger (orientierte Polypropylenfolie) aufgetragen und durch Einwirkung von UV-Licht einer Mitteldruckquecksilberdampflampe mit 120 W/cm unter Stickstoffinertisierung mit verschiedenem Restsauerstoffgehalt bei verschiedenen Bahngeschwindigkeiten gehärtet. Die Auftragsmenge beträgt in jedem Fall ca. 1 g/m².

### Trennwert:

Für die Ermittlung der Trennwerte werden verschiedene, 25 mm breite Klebebänder verwendet, und zwar ein mit Acrylatkleber beschichtetes Klebeband, dass im Handel von der Firma Beiersdorf unter der Bezeichnung TESA® 7475 erhältlich ist, sowie ein Klebeband, dass mit einem industrieüblichem Heißschmelzhaftklebstoff auf Basis Styrol-Isopren-Styrol Blockkopolymer (SIS), Styrol Butadien Kautschuk (SBR) und Kolophonium Harz Klebrigmacher beschichtet ist.

Zur Messung der Abhäsivität werden diese Klebebänder auf den Untergrund aufgewalzt und anschließend bei 40 °C unter einem Gewicht von 70 g/cm² gelagert. Nach 24 Stunden wird die Kraft gemessen, die benötigt wird, um das jeweilige Klebeband mit einer Geschwindigkeit von 30 cm/min. unter einem Schälwinkel von 180 ° vom Untergrund abzuziehen. Diese Kraft wird als Trennkraft oder Trennwert bezeichnet. Die allgemeine Testprozedur entspricht im wesentlichen der Testmethode Nr. 10 der "Föderation Internationale des Fabricants et Transformateurs D'Adhésifs et Thermocollants sur Papier et autres Supports" (FINAT). Zur Überprüfung des Alterungsverhaltens wird die Lagerzeit auf 3 Monate unter den oben beschriebenen Bedingungen verlängert. Man spricht von Verblocken, wenn die abhäsive Wirkung der Trennbeschichtung durch die Alterung soweit reduziert wird, dass das Klebeband nicht oder nur mit sehr hoher Krafteinwirkung abgelöst werden kann.

### Loop-Test:

Der Loop-Test dient zur schnellen Ermittlung des Härtungsgrades einer Trennbeschichtung. Hierzu wird ein etwa 20 cm langer Streifen des Klebebandes TESA® 4154 der Firma Beiersdorf 3 mal auf den Untergrund aufgewalzt und sofort wieder von Hand abgezogen. Dann wird durch Zusammenlegen der Enden des Klebebandes eine Schlaufe gebildet, so dass die Klebeflächen beider Enden auf etwa einem Zentimeter Strecke Kontakt haben. Dann werden die Enden wieder von Hand auseinandergezogen, wobei die Kontaktfläche gleichmäßig zur Mitte des Klebebandes wandern sollte. Im Falle einer Kontamination mit schlecht ausgehärtetem Trennmaterial ist die Klebkraft des Klebebandes nicht mehr ausreichend, um die Kontaktfläche beim Auseinanderziehen der Enden zusammenzuhalten. In diesem Falle gilt der Test als nicht bestanden.

### Restklebkraft:

Die Bestimmung der Restklebkraft erfolgt weitestgehend gemäß der FINAT Testvorschrift Nr. 11. Hierzu wird das Klebeband TESA® 7475 der Firma Beiersdorf auf den Untergrund gewalzt und anschließend bei 40 °C unter einem Gewicht von 70 g/cm² gelagert. Nach 24 Stunden wird das Klebeband vom Trennsubstrat getrennt und auf einen definierten Untergrund (Stahlplatte, Glasplatte, Folie) aufgewalzt. Nach einer Minute wird die Kraft gemessen, die benötigt wird, um das Klebeband mit einer Geschwindigkeit von 30 cm/min. unter einem Schälwinkel von 180 ° vom Untergrund abzuziehen. Der so gemessene Wert wird durch den Wert geteilt, den ein unbehandeltes Klebeband unter ansonsten gleichen Testbedingungen ergibt. Das Ergebnis wird als Restklebkraft bezeichnet und in der Regel in Prozent angegeben. Werte über 80 % gelten dem Fachmann als ausreichend und sprechen für eine gute Aushärtung.

### Strahlenhärtende Organosiliziumverbindungen:

Als strahlenhärtende Organosiliziumverbindungen werden Produkte der Firma Goldschmidt, die unter der Bezeichnung TEGO®RC erhältlich sind, eingesetzt. Das Produkt TEGO®RC 902 hat in der gehärteten Beschichtung eine sehr gute abhäsive Wirkung gegen klebende Substanzen. Der Gehalt an zur Polymerisation befähigten Doppelbindungen ist sehr gering. TEGO®RC 902 wird zur Verbesserung der Haftung zum Untergrund mit TEGO®RC 711 abgemischt. TEGO®RC 711 hat einen höheren Gehalt an zur Polymerisation befähigten Doppelbindungen und somit, wenn für sich allein beschichtet, in der gehärteten Beschichtung auch eine geringere Abhäsivität gegen klebende Substanzen.

| Versuchsserie I: | | | | |
|---|---|---|---|---|
| Beispiel UV-Härtung | TEGO® RC Produkt | Antioxidans | Bahngeschwindigkeit m/min. | Restsauerstoff bei der UV-Härtung |
| 1 | RC 902/RC 711 70:30 | kein | 20 | 20 ppm |
| 2 | RC 902/RC 711 70:30 | kein | 20 | 200 ppm |
| 3 | RC 902/RC 711 70:30 | kein | 20 | 500 ppm |
| 4 | RC 902/RC 711 70:30 | 1 % Triphenylphosphit | 20 | 20 ppm |
| 5 | RC 902/RC 711 70:30 | 1 % Triphenylphosphit | 20 | 200 ppm |
| 6 | RC 902/RC 711 70:30 | 1 % Triphenylphosphit | 20 | 500 ppm |

| Anwendungstechnische Prüfung der Versuchsserie I: | | | | | |
|---|---|---|---|---|---|
| Beispiel | Loop Test*) | Restklebkraft % | Trennwert nach 24 Stunden TESA®7475 cN/2,5 cm | Trennwert nach 24 Stunden Heißschmelzklebeband cN/2,5 cm | Trennwert nach 3 Monaten Heißschmelzklebeband cN/2,5 cm |
| 1 | i.O. | 90 | 7 | 45 | 46 |
| 2 | i.O. | 80 | 7 | 48 | 70 |
| 3 | Nicht i.O. | 40 | 5 | 40 | 180 |
| 4 | i.O. | 90 | 7 | 45 | 48 |
| 5 | i.O. | 90 | 7 | 46 | 43 |
| 6 | i.O. | 80 | 7 | 50 | 46 |

| | | | | | |
|---|---|---|---|---|---|
| *) i.O. = in Ordnung | | | | | |

| Versuchsserie II: | | | | |
|---|---|---|---|---|
| Beispiel UV-Härtung | TEGO® RC Produkt | Antioxidans | Bahnge schwindigkeit m/min. | Restsauerstoff bei der UV-Härtung |
| 7 | RC 711 | kein | 20 | 20 ppm |
| 8 | RC 711 | kein | 20 | 500 ppm |
| 9 | RC 711 | kein | 20 | 1.500 ppm |
| 10 | RC 711 | 1 % Triphenylphosphit | 20 | 20 ppm |
| 11 | RC 711 | 1 % Triphenylphosphit | 20 | 500 ppm |
| 12 | RC 711 | 1 % Triphenylphosphit | 20 | 1.500 ppm |

| Anwendungstechnische Prüfung der Versuchsserie II: | | | | | |
|---|---|---|---|---|---|
| Beispiel | Loop Test*) | Restklebkraft % | Trennwert nach 24 Stunden TESA®7475 cN/2,5 cm | Trennwert nach 24 Stunden Heißschmelzklebeband cN/2,5 cm | Trennwert nach 3 Monaten Heißschmelzklebeband cN/2,5 cm |
| 7 | i.O. | 90 | 354 | 220 | 213 |
| 8 | i.O. | 80 | 450 | 324 | Verblockt |
| 9 | Nicht i.O. | 40 | 650 | 452 | Verblockt |
| 10 | i.O. | 90 | 324 | 215 | 231 |
| 11 | i.O. | 90 | 342 | 232 | 245 |
| 12 | i.O. | 80 | 362 | 226 | 329 |

| | | | | | |
|---|---|---|---|---|---|
| *) i.O. = in Ordnung | | | | | |

| Versuchsserie III: | | | | |
|---|---|---|---|---|
| Beispiel UV-Härtung | TEGO® RC Produkt | Antioxidans | Bahngeschwindigkeit m/min. | Restsauerstoff bei der UV-Härtung |
| 13 | R 902/RC 711 70:30 | 1 % 4,6-Bis(octyl-thiomethyl)-o-kresol | 20 | 200 ppm |
| 14 | RC 902/RC 711 70:30 | 1 % Tributylphosphit | 20 | 200 ppm |
| 15 | RC 902/RC 711 70:30 | 1 % Tetrakis (2,4-die-t-butylphenyl)-4,4-biphenyl-endiphosphonit | 20 | 200 ppm |
| 16 | RC 902/RC 711 70:30 | 1 % Phenyldi-isodecyl-phosphit | 20 | 200 ppm |
| 17 | RC 902/RC 711 70:30 | 0,1 % Triphenylphosphit | 20 | 200 ppm |
| 18 | RC 902/RC 711 70:30 | 5 % Triphenylphosphit | 20 | 200 ppm |

| Anwendungstechnische Prüfung der Versuchsserie III: | | | | | |
|---|---|---|---|---|---|
| Beispiel | Loop Test*) | Restklebkraft % | Trennwert nach 24 Stunden TESA®7475 cN/2,5 cm | Trennwert nach 24 Stunden Heißschmelzklebeband cN/2,5 cm | Trennwert nach 3 Monaten Heißschmelzklebeband cN/2,5 cm |
| 13 | i.O. | 80 | 6 | 55 | 61 |
| 14 | i.O. | 92 | 7 | 48 | 55 |
| 15 | i.O. | 82 | 5 | 51 | 62 |
| 16 | i.O. | 93 | 7 | 45 | 52 |
| 17 | i.O. | 85 | 7 | 46 | 48 |
| 18 | i.O. | 95 | 7 | 43 | 46 |

| | | | | | |
|---|---|---|---|---|---|
| *) i.O. = in Ordnung | | | | | |

| Versuchsserie VI: | | | | |
|---|---|---|---|---|
| Beispiel UV-Härtung | TEGO® RC Produkt | Antioxidans | Bahngeschwindigkeit m/min. | Restsauerstoff bei der UV-Härtung |
| 19 | RC 902/RC 711 70:30 | Kein | 200 | 20 ppm |
| 20 | RC 902/RC 711 70:30 | Kein | 200 | 200 ppm |
| 21 | RC 902/RC 711 70:30 | Kein | 200 | 500 ppm |
| 22 | RC 902/RC 711 70:30 | 1 % Triphenylphosphit | 200 | 20 ppm |
| 23 | RC 902/RC 711 70:30 | 1 % Triphenylphosphit | 200 | 200 ppm |
| 24 | RC 902/RC 711 70:30 | 1 % Triphenylphosphit | 200 | 500 ppm |

| Anwendungstechnische Prüfung der Versuchsserie VI: | | | | | |
|---|---|---|---|---|---|
| Beispiel | Loop Test*) | Restklebkraft % | Trennwert nach 24 Stunden TESA®7475 cN/2,5 cm | Trennwert nach 24 Stunden Heißschmelzklebeband cN/2,5 cm | Trennwert nach 3 Monaten Heißschmelzklebeband cN/2,5 cm |
| 19 | i.O. | 92 | 9 | 42 | 49 |
| 20 | Nicht i.O. | 60 | 6 | 46 | 85 |
| 21 | Nicht i.O. | 42 | 5 | 38 | 224 |
| 22 | i.O. | 91 | 8 | 42 | 44 |
| 23 | i.O. | 89 | 7 | 44 | 45 |
| 24 | i.O. | 78 | 8 | 52 | 63 |

| | | | | | |
|---|---|---|---|---|---|
| *) i.O. = in Ordnung | | | | | |

## Patentansprüche

1. Strahlenhärtbare Beschichtungsmasse für die Herstellung von abhäsiven Beschichtungen, welche mindestens ein strahlungshärtendes Organopolysiloxan mit (Meth)acrylsäureestergruppen, ein Zusatzmittel zur Kompensation der durch Sauerstoff verursachten Inhibierung bei der Härtung und gegebenenfalls Photoinitiatoren übliche Hilfs- und Zusatzstoffe enthält, **dadurch gekennzeichnet, dass** als Zusatzmittel mindestens ein Antioxidans aus der Gruppe der Phosphor-(III)-verbindungen und/oder der schwefelhaltigen Verbindungen mitverwendet wird.

2. Strahlenhärtbare Beschichtungsmasse gemäß Anspruch 1, **dadurch gekennzeichnet, dass** als Antioxidantien Verbindungen der allgemeinen Formel
(R)ₐ-P-(OR)_{b}
worin die Reste
R gleich oder verschieden aliphatische, cycloaliphatische, aromatische, araliphatische oder heterocyclische Radikale sind und
a und b Werte von 0 bis 3 sein können und worin a + b 3 sein muß,
mitverwendet werden.

3. Strahlenhärtbare Beschichtungsmasse gemäß Anspruch 2, **dadurch gekennzeichnet, dass** als Antioxidantien Verbindungen der allgemeinen Formel
(R)ₐ-P-(OR)_{b}
worin
R aromatische und/oder aliphatische Reste sind.

4. Strahlenhärtbare Beschichtungsmasse gemäß Anspruch 2 und/oder 3, **dadurch gekennzeichnet, dass** als Antioxidantien Verbindungen der allgemeinen Formel
(R)₂-P-(OR)₁
mitverwendet werden.

5. Strahlenhärtbare Beschichtungsmasse gemäß Anspruch 2, **dadurch gekennzeichnet, dass** als Antioxidantien Verbindungen der allgemeinen Formel
P- (OR)₃
mitverwendet werden.

6. Strahlenhärtbare Beschichtungsmasse gemäß Ansprüche 1 bis 5, **dadurch gekennzeichnet, dass** als Antioxidantien Verbindungen verwendet werden, die einen Schmelzpunkt unter ca. 80 °C haben.

7. Strahlenhärtbare Beschichtungsmasse gemäß Ansprüche 1 bis 6, **dadurch gekennzeichnet, dass** als Antioxidantien Verbindungen verwendet werden, die bei Raumtemperatur flüssig und mit der Siliconmatrix verträglich sind.

8. Strahlenhärtbare Beschichtungsmasse gemäß Anspruch 3, **dadurch gekennzeichnet, dass** zur Strahlenhärtung UV-Licht verwendet wird.
